# EUROPEAN PATENT APPLICATION

(11) **EP 2 237 242 A1**
(43) Date of publication of application: **06.10.2010**
(21) Application number: 10159069.3
(22) Date of filing: 02.04.2010
(51) Int. Cl.: G09B 17/02

(54) **A device to assist reading**

(30) Priority: 03.04.2009 IE 20090260; 28.05.2009 IE 20090416; 08.07.2009 GB 0911829; 13.08.2009 GB 0914135
(71) Applicant: Byrne, Sheila, Co Dublin (IE)
(72) Inventor: Byrne, Sheila, 00, Malahide (IE); Egan, Honora, 00, Dublin (IE)
(74) Representative: Roche, Dermot

(57) **Abstract**

A device (1) to assist users with reading difficulties to read. The device (1) comprises a first frame element (2), a second frame element (3), and a holder element. The first frame element (2) is movably mounted to the holder element in a slidable manner. The second frame element (3) is fixedly attached to the holder element. An opening (22) is defined between the first frame element (2) and the second frame element (3). The opening (22) acts as a viewing part through which a first piece of text may be read through the opening (22) and through the transparent holder element. The first frame element (2) and the second frame element (3) overly the text surrounding the first piece of text, and thus the first frame element (2) and the second frame element (3) prevent the surrounding text from being seen. The first frame element (2) is movable relative to the holder element and the second frame element (3) to selectively adjust the size of the viewing part opening (22) to enable text of different sizes to be read.

## Description

### Introduction

This invention relates to a device to assist reading.

### Statements of Invention

According to the invention there is provided a device to assist reading, the device defining a viewing part through which a first piece of text may be read and a non-viewing part to prevent a second piece of text from being seen, the size of the viewing part being selectively adjustable to enable text of different sizes to be read.

The device of the invention may be used to assist users with reading difficulties, such as dyslexia, to read. By preventing the second piece of text, for example the text surrounding the first piece of text, from being seen, it has been found that users are more readily able to concentrate on the first piece of text. In the case where the first piece of text is of a small size, the viewing part may be decreased in size to ensure that none of the surrounding text encroaches into the viewing part. In the case where the first piece of text is of a large size, the viewing part may be increased in size to ensure that all of the first piece of text is visible in the viewing part.

In one embodiment of the invention the device defines a substantially elongate viewing part. The elongate viewing part is particularly suitable for reading conventional lines of text. Preferably the viewing part has a height dimension and a width dimension. Ideally the height dimension is less than the width dimension. Most preferably the height dimension is selectively adjustable to enable text of different heights to be read.

In another embodiment the non-viewing part comprises a first element to prevent a piece of text above the first piece of text from being seen. Preferably the non-viewing part comprises a second element to prevent a piece of text below the first piece of text from being seen. Ideally the viewing part is defined between the first element and the second element. Most preferably the viewing part comprises an opening between the first element and the second element. The first element may be movable relative to the second element to adjust the size of the viewing part. Preferably the first element is movable relative to the second element in one or more discrete steps. The discrete steps may be chosen to suit standard text sizes. Ideally the non-viewing part comprises a third element to prevent a piece of text to a first side of the first piece of text from being seen. Most preferably the non-viewing part comprises a fourth element to prevent a piece of text to a second side of the first piece of text from being seen. The third element and/or the fourth element may be fixedly attached to the first element. Preferably the third element and/or the fourth element is configured to at least partially overlap the second element.

In one case the device comprises a holder element. In this manner all of the components of the device may be held together in a compact, easy to carry, and easy to store form. Preferably the first element is mounted to the holder element. Ideally the first element is movably mounted to the holder element. Most preferably the second element is mounted to the holder element. The second element may be fixedly attached to the holder element. Preferably the third element and/or the fourth element is mounted to the holder element. Ideally the third element and/or the fourth element is movably mounted to the holder element. Preferably at least part of the holder element is transparent. The first piece of text may be read through the transparent part of the holder element. Ideally the transparent part of the holder element comprises a clear transparent portion. Most preferably the transparent part of the holder element comprises a coloured transparent portion. It has been found that some users are more readily able to concentrate on the first piece of text when viewed through the coloured transparent portion. The holder element may comprise a main body part and the coloured transparent portion may be releasably mountable to the main body part. In this manner a first coloured transparent portion may be exchanged for a second coloured transparent portion. The second coloured transparent portion may be of a different colour to the first coloured transparent portion. It has been found that some users are more readily able to concentrate on the first piece of text when viewed through one colour rather than through another colour. In this manner the device enables the user to select the most appropriate colour through which to view the first piece of text. Preferably the viewing part is aligned with the transparent part of the holder element.

### Brief Description of the Drawings

The invention will be more clearly understood from the following description of some embodiments thereof, given by way of example only, with reference to the accompanying drawings, in which:
Fig. 1 is an exploded isometric view of a device to assist reading according to the invention,
Fig. 2 is an isometric view from above of a first element of the device of Fig. 1,
Fig. 3 is a plan view from above of the first element of Fig. 2,
Fig. 4 is an enlarged isometric view of part of the first element of Fig. 2,
Fig. 5 is an isometric view from below of the first element of Fig. 2,
Fig. 6 is an isometric view of a second element of the device of Fig. 1,
Fig. 7 is a plan view of the second element of Fig. 6,
Fig. 8 is an enlarged end view of part of the second element of Fig. 6,
Fig. 9 is an isometric view of a coloured transparent portion of the device of Fig. 1,
Fig. 10 is an isometric view from above of a main body part of the device of Fig. 1,
Fig. 11 is a plan view from above of the main body part of Fig. 10,
Fig. 12 is an enlarged plan view from above of part of the main body part of Fig. 10,
Fig. 13 is an enlarged isometric view from above of part of the main body part of Fig. 10,
Fig. 14 is an enlarged end view of part of the main body part of Fig. 10,
Fig. 15 is an isometric view from below of the main body part of Fig. 10,
Fig. 16 is an enlarged isometric view from below of part of the main body part of Fig. 10,
Figs. 17 to 20 are isometric views from below illustrating mounting of the coloured transparent portion of Fig. 9 to the main body part of Fig. 10,
Fig. 21 is an isometric view of the device of Fig. 1 after assembly in a first reading configuration,
Fig. 22 is a plan view of the device of Fig. 21 in the first reading configuration,
Fig. 23 is an isometric view of the device of Fig. 1 after assembly in a second reading configuration,
Fig. 24 is a plan view of the device of Fig. 23 in the second reading configuration,
Fig. 25 is an isometric view from above of another device to assist reading according to the invention, and
Fig. 26 is an isometric view from below of the device of Fig. 25.

### Detailed Description

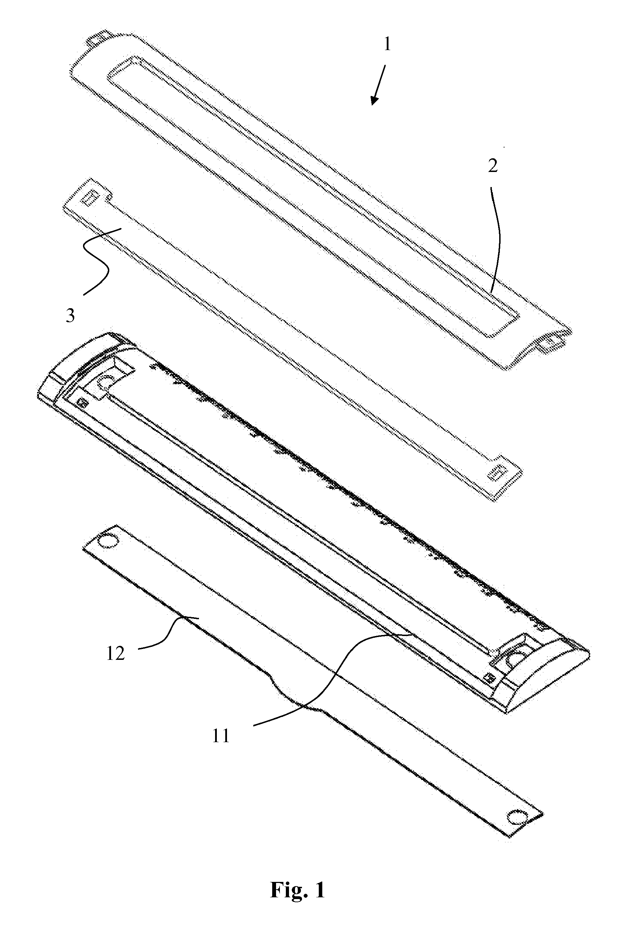

Referring to the drawings, and initially to Figs. 1 to 24 thereof, there is illustrated a device 1 according to the invention. The device 1 may be used to assist users with reading difficulties, such as dyslexia, to read.

The device 1 comprises a first frame element 2, a second frame element 3, and a holder element.

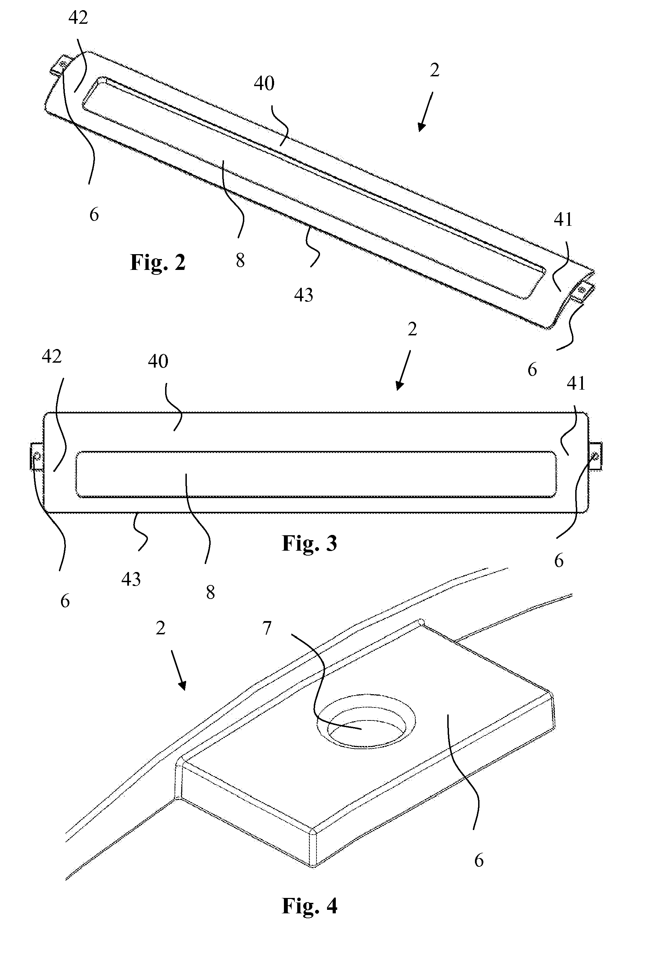

The first frame element 2 is of an opaque material. The first frame element 2 has an elongate rectangular shape. The first frame element 2 comprises an upper portion 40, a lower portion 43, a right hand portion 41, and a left hand portion 42. The upper portion 40, the lower portion 43, the right hand portion 41, and the left hand portion 42 are formed integrally. The first frame element 2 comprises an elongate rectangular opening 8 extending therethrough (Fig. 2). The first frame element 2 comprises a wing 6 protruding from the right hand portion 41 and a wing 6 protruding from the left hand portion 42 (Fig. 2). Each wing 6 comprises a circular recess 7 (Fig. 4).

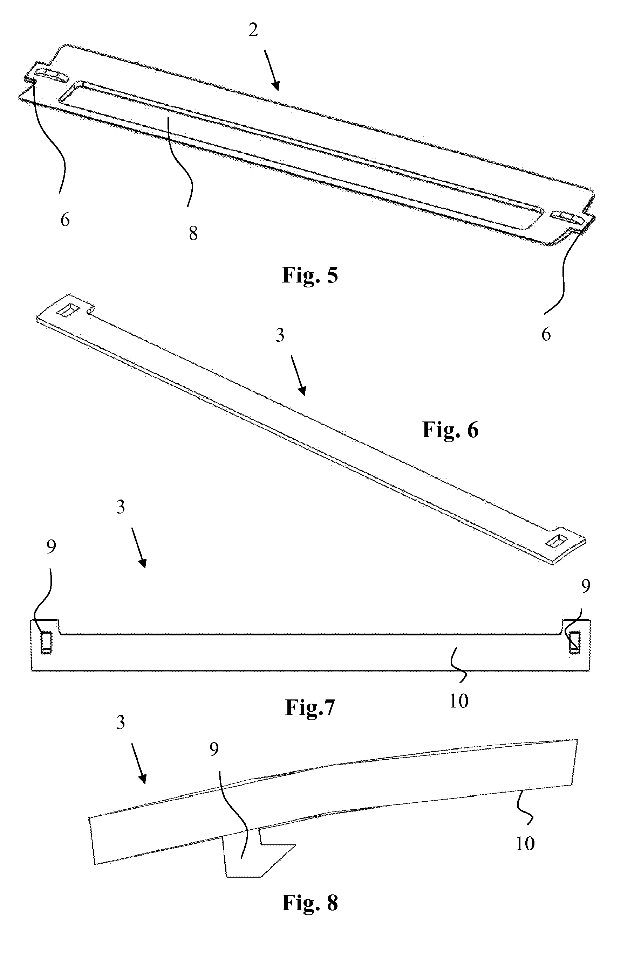

The second frame element 3 is of an opaque material. The second frame element 3 has an elongate 'U'-shape (Fig. 6). The second frame element 3 comprises two fingers 9 protruding inwardly from an inner surface 10 of the second frame element 3 (Fig. 8).

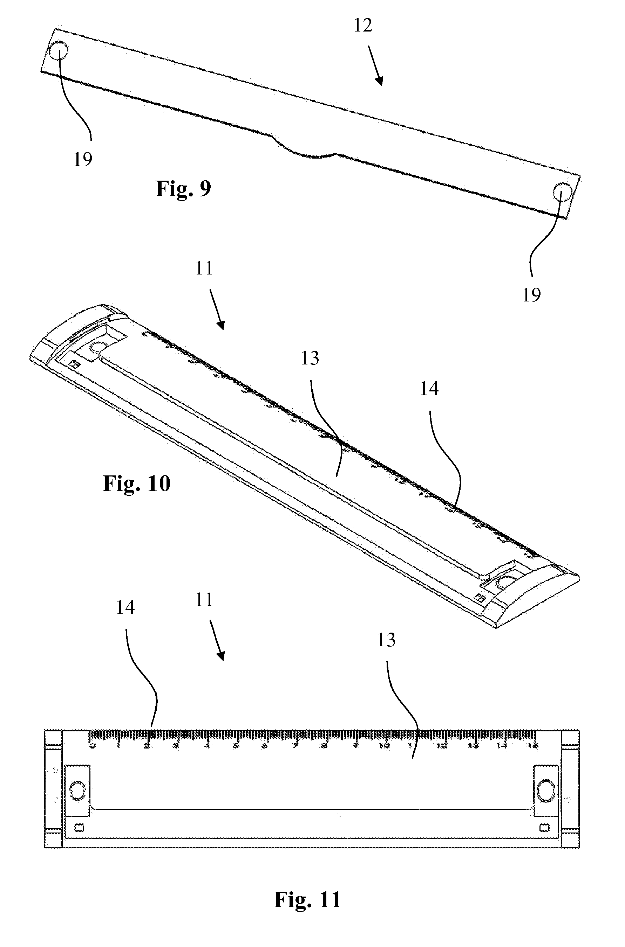

The holder element comprises a coloured transparent sheet 12 (Fig. 9) and a main body part 11 (Fig. 10).

The coloured transparent sheet 12 has an elongate rectangular shape (Fig. 9). The coloured transparent sheet 12 comprises a circular opening 19 at each end of the coloured transparent sheet 12.

The main body part 11 is of a clear transparent material.

The main body part 11 has an elongate rectangular shape. The edges of the main body part 11 comprise smooth straight surfaces. The main body part 11 may therefore be used as a ruler for drawing straight lines.

The upper surface 13 of the main body part 11 comprises a plurality of measurement markings 14. The main body part 11 may therefore be used as a ruler for measuring purposes.

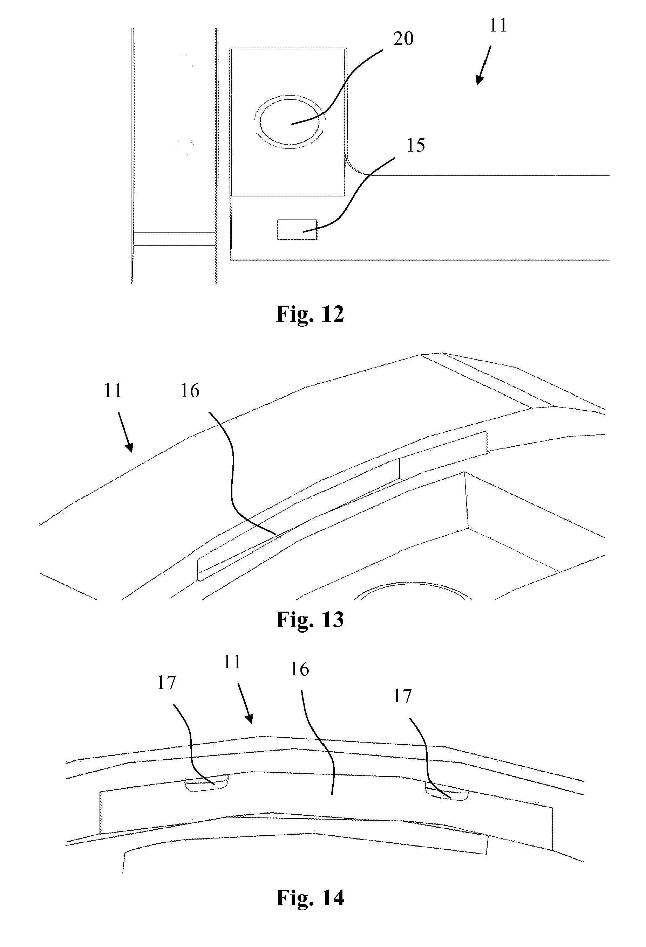

On the upper surface 13 of the main body part 11, each end of the main body part 11 comprises an elongate slot 16 (Fig. 13) into which one wing 6 of the first frame element 2 may be extended. By extending a wing 6 into each slot 16, the first frame element 2 may be movably mounted to the main body part 11 of the holder element in a slidable manner. Each slot 16 comprises two inwardly protruding teeth 17 (Fig. 14). Either tooth 17 may be cooperatively engaged with the circular recess 7 of the wing 6. By engaging a tooth 17 into each circular recess 7, the first frame element 2 may be temporarily retained in one of two discrete positions.

The upper surface 13 of the main body part 11 comprises two recesses 15 (Fig. 12) for cooperating engagement with the two fingers 9 of the second frame element 3 in a snap-fit manner. By engaging the two fingers 9 into the two recesses 15, the second frame element 3 may be fixedly attached to the main body part 11 of the holder element.

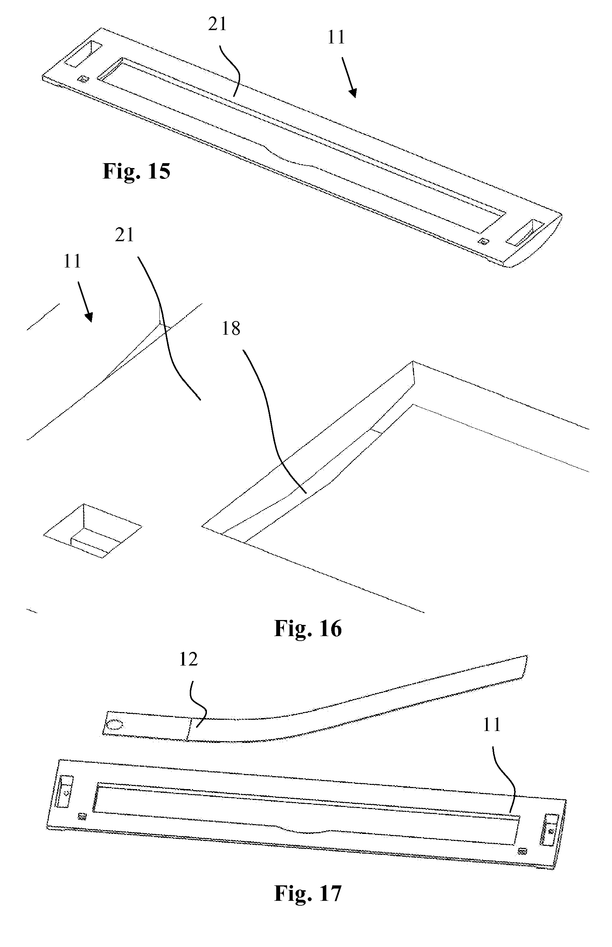

On the lower surface 21 of the main body part 11, each end of the main body part 11 comprises an elongate slot 18 (Fig. 16) into which one end of the coloured transparent sheet 12 may be extended. Each slot 18 comprises an upwardly protruding tooth 20 (Fig. 12). The tooth 20 may be cooperatively engaged with the circular opening 19 of the coloured transparent sheet 12. By extending each end of the coloured transparent sheet 12 into each slot 18 and by engaging each tooth 20 into each circular opening 19, the coloured transparent sheet 12 may be releasably mounted to the main body part 11 (Figs. 17 to 20).

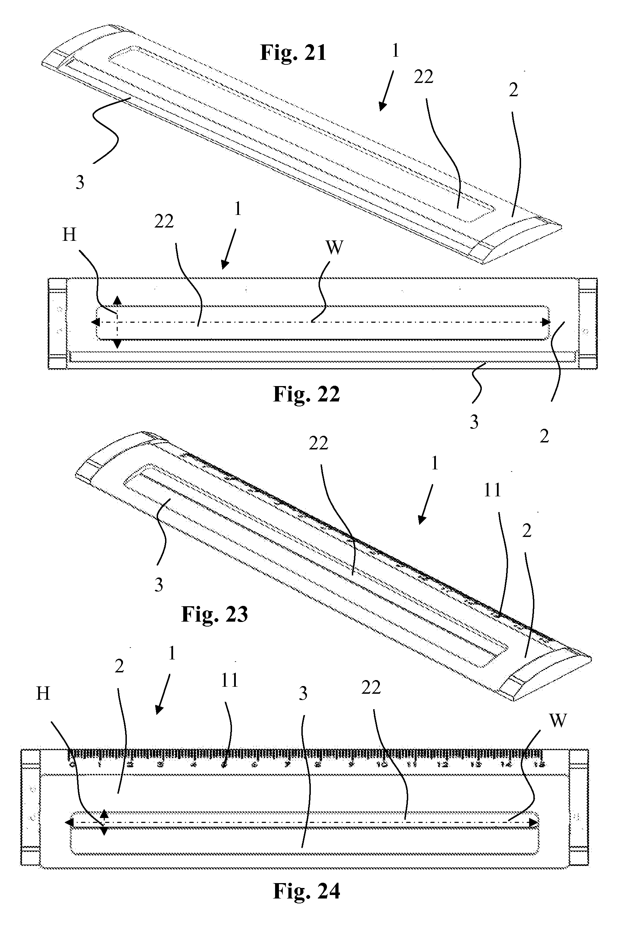

When the second frame element 3 is fixedly attached to the main body part 11 and the first frame element 2 is movably mounted to the main body part 11 in the first discrete reading position (Fig. 22) or in the second discrete reading position (Fig. 24), an opening 22 is defined between the first frame element 2 and the second frame element 3. In this manner the opening 22 acts as a viewing part through which a first piece of text may be read through the opening 22 through the transparent main body part 11 and through the coloured transparent sheet 12. The viewing part opening 22 is aligned with the clear transparent main body part 11. The opening 22 is elongate with a height dimension H less than a width dimension W in both the first discrete reading position (Fig. 22) and the second discrete reading position (Fig. 24).

The text being read through the viewing part opening 22 may be any characters, letters, numerals, words or the like written, printed or formed in any way on any surface. The text may be provided on any surface, for example a book, newspaper, manuscript or the like. The text may be formed using any suitable means for example printed onto the surface, formed using a pen or pencil or any other writing instrument.

The upper portion 40 of the first frame element 2 overlies the text on the line above the first piece of text, and thus the first frame element 2 prevents the text on the line above the first piece of text from being seen. Similarly the right hand portion 41 of the first frame element 2 overlies the text to the right side of the first piece of text, and thus the first frame element 2 prevents the text to the right side of the first piece of text from being seen. Similarly the left hand portion 42 of the first frame element 2 overlies the text to the left side of the first piece of text, and thus the first frame element 2 prevents the text to the left side of the first piece of text from being seen. Similarly second frame element 3 overlies the text on the line below the first piece of text, and thus the second frame element 3 prevents the text on the line below the first piece of text from being seen. In this manner the first frame element 2 and the second frame element 3 act as a non-viewing part to prevent the surrounding text from being seen. By preventing the surrounding text from being seen, it has been found that users are more readily able to concentrate on the first piece of text.

The first frame element 2 is movable relative to the main body part 11 and the second frame element 3 in one discrete step from the first discrete reading position (Fig. 22) to the second discrete reading position (Fig. 24). In this manner the size of the viewing part opening 22 may be selectively adjusted to enable text of different sizes to be read. In particular the height dimension H of the viewing part opening 22 may be selectively adjusted to enable text of different heights to be read. In the case where the first piece of text is of a small size for example 5 mm height, the viewing part opening 22 may be decreased in size to ensure that none of the surrounding text encroaches into the viewing part opening 22. In the case where the first piece of text is of a large size for example 12 mm height, the viewing part opening 22 may be increased in size to ensure that all of the first piece of text is visible in the viewing part opening 22.

In the first discrete reading position (Fig. 22), the lower portion 43 of the first frame element 2 overlaps the second frame element 3. In the second discrete reading position (Fig. 24), the right hand portion 41 and the left hand portion 42 of the first frame element 2 overlap the second frame element 3.

It will be appreciated that a clear or coloured transparent sheet may be provided extending across the opening 22 between the first frame element 2 and the second frame element 3.

It will also be appreciated that the first frame element 2 may be movable relative to the main body part 11 and the second frame element 3 in two or more discrete steps. In this case the device may have three or more discrete reading positions.

To assemble the device 1, the two fingers 9 of the second frame element 3 are cooperatively engaged into the two recesses 15 of the main body part 11 in a snap-fit manner to fixedly attach the second frame element 3 to the main body part 11.

One wing 6 of the first frame element 2 is extended into an elongate slot 16 at each end of the main body part 11. The first frame element 2 is thus movably mounted to the main body part 11 of the holder element in a slidable manner. Either tooth 17 of each slot 16 is cooperatively engaged with the circular recess 7 of the wing 6. The first frame element 2 is thus temporarily retained in one of the two discrete reading positions.

One end of the coloured transparent sheet 12 is extended into an elongate slot 18 at each end of the main body part 11. Each tooth 20 is cooperatively engaged with a circular opening 19 of the coloured transparent sheet 12. The coloured transparent sheet 12 is thus releasably mounted to the main body part 11.

In use, the assembled device 1 is placed resting on a sheet of text. The device 1 is positioned in the first discrete reading position (Fig. 22) or in the second discrete reading position (Fig. 24) with the viewing part opening 22 over the first piece of text to be read. In this manner the opening 22 acts as the viewing part through which the first piece of text may be read through the opening 22 through the transparent main body part 11 and through the coloured transparent sheet 12.

If desired, the first frame element 2 may be moved relative to the main body part 11 and the second frame element 3 in one discrete step to the second discrete reading position (Fig. 24) or to the first discrete reading position (Fig. 22) as appropriate. In this manner the size of the viewing part opening 22 may be selectively adjusted to enable text of different sizes to be read.

The device 1 may thus be used to assist users with reading difficulties, such as dyslexia, to read.

In further detail, Fig. 1 illustrates the frame 2, the underliner 3, the base 11, and the acetate 12. Fig. 2 illustrates the frame 2 with the 12 mm slot 8, and the tabs 6 at either end to allow the frame 2 to slot into the base 11 and to be held in place. Fig. 4 illustrates the frame tab 6. The tab 6 slots into the base 11. The hole 7 in the centre clicks into the holding pip 17. Fig. 6 illustrates the underliner 3 which slots into the base 11 and is held securely in place using the snap fits 9. The underliner 3 underlines text as a user is using the device 1. Fig. 8 illustrates the snap fit elements 9. Fig. 9 illustrates the acetate 12. Fig. 10 illustrates the base 11. Fig. 11 illustrates the measurements 14, and the slots 15 for the underliner 3. Fig. 12 illustrates the slot 18 to hold the acetate 12 in place, and the slots 15 for the snap fit on the underliner 3 to fit into. Fig. 13 illustrates the frame location slot 16 where the tab 6 on the frame 2 clicks into. Fig. 14 illustrates the slot 16 for the frame 2, and the pips 17 that hold the frame 2 in place at 12 mm and 5 mm. Fig. 15 illustrates the base -acetate locater groove 18 for the acetate 12. Fig. 16 illustrates the acetate 12 pushed into the slot 18 to be held securely in place.

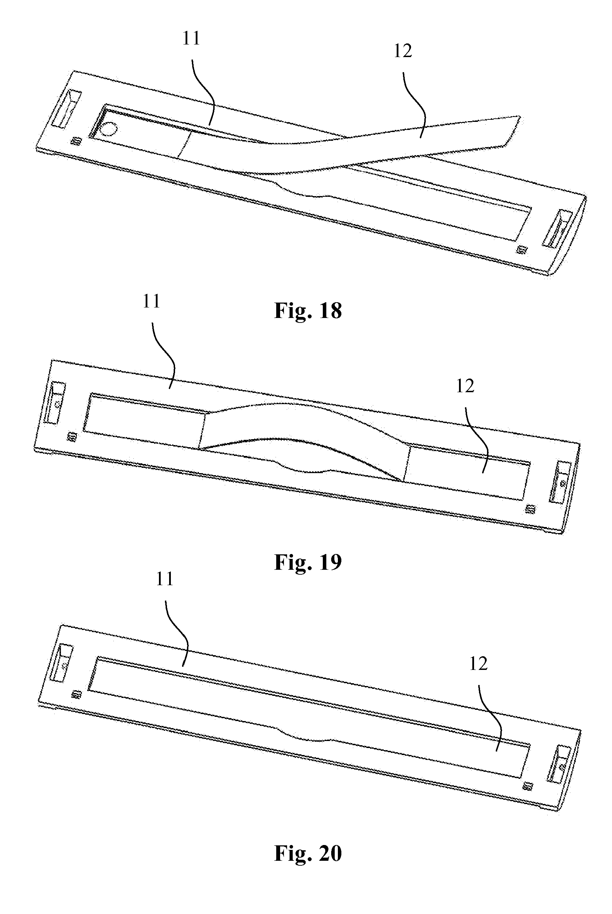

Fig. 17 illustrates fitting the acetate 12. The user picks the required coloured acetate 12, and lines up with the slot 18 on the base 11 of the device 1. Fig. 18 illustrates the acetate 12 slid into the groove 18 and the end of the acetate 12 pushed through the holder 18. Fig. 19 illustrates the other end of the acetate 12 pushed through the holder 18. Fig. 20 illustrates the acetate 12 pushed down to ensure it is held correctly in place.

Fig. 21 illustrates the 12 mm window 22. Fig. 22 illustrates the frame 2 in the 12 mm window position. Fig. 24 illustrates the frame 2 in the 5 mm window position.

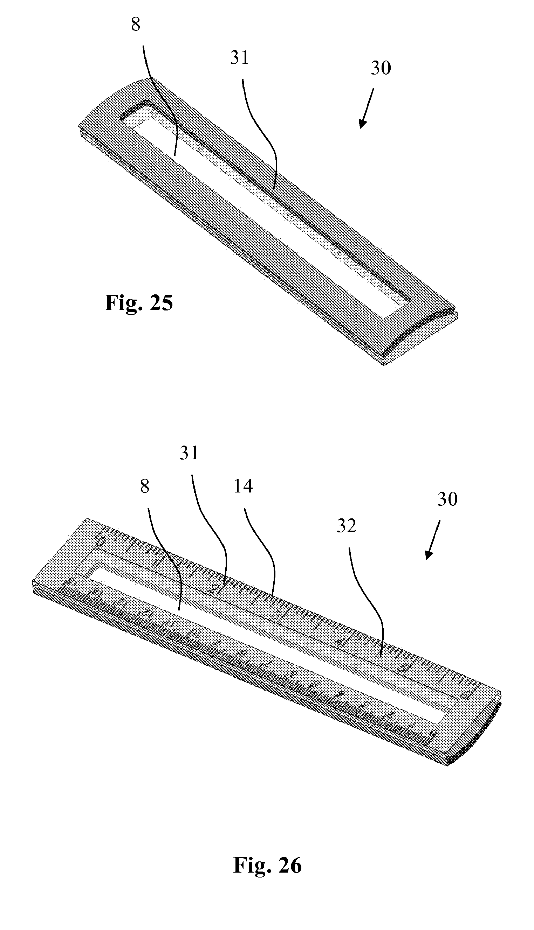

In Figs. 25 and 26 there is illustrated another device 30 according to the invention, which is similar to the device 1 of Figs. 1 to 24, and similar elements in Figs. 25 and 26 are assigned the same reference numerals.

In this case the device 30 comprises a single frame element 31. The frame element 31 is of an opaque material. The frame element 31 has an elongate rectangular shape. The frame element 31 comprises an elongate rectangular opening 8 extending therethrough.

The edges of the frame element 31 comprise smooth straight surfaces. The frame element 31 may therefore be used as a ruler for drawing straight lines.

The lower surface 32 of the frame element 31 comprises a plurality of measurement markings 14. The frame element 31 may therefore be used as a ruler for measuring purposes.

The opening 8 acts as a viewing part through which a first piece of text may be read through the opening 8. The frame element 31 overlies the text on the line above the first piece of text, and thus the frame element 31 prevents the text on the line above the first piece of text from being seen. Similarly the frame element 31 overlies the text to the right side of the first piece of text, and thus the frame element 31 prevents the text to the right side of the first piece of text from being seen. Similarly the frame element 31 overlies the text to the left side of the first piece of text, and thus the frame element 31 prevents the text to the left side of the first piece of text from being seen. Similarly the frame element 31 overlies the text on the line below the first piece of text, and thus the frame element 31 prevents the text on the line below the first piece of text from being seen. In this manner the frame element 31 acts as a non-viewing part to prevent the surrounding text from being seen. By preventing the surrounding text from being seen, it has been found that users are more readily able to concentrate on the first piece of text.

In use, the device 30 is placed resting on a sheet of text. The device 30 is positioned with the viewing part opening 8 over the first piece of text. In this manner the opening 8 acts as a viewing part through which the first piece of text may be read through the opening 8.

The device 30 may thus be used to assist users with reading difficulties, such as dyslexia, to read.

This invention relates to a reading aid that will allow a child or adult to read without difficulty in following each word and will help to focus on the line that he/she is reading from. The reading aid will help with children and adults who are just starting to learn how to read but also children and adults who have reading disabilities.

The invention relates to a reading aid to allow a child or adult to be able to read and follow the words on the line they are reading from. The invention helps the child/adult to concentrate on the line that they are trying to read and focus only on this line of words. It stops the person from jumping from one line up or down from the line they are supposed to be reading from. Conventionally people learning to read from a book are looking at a white background with black print. Some people have difficulties doing this. People who have dyslexia and other reading problems, may find it difficult to stay and focus on the line that they are reading from. All the print may become a blur to them whether they are using a finger to try and follow the word or not. The reading aid has a large window cut out in the centre of it. In the window the child/adult will frame the line being read in the window. As the user comes to the end of the line, the user drags it down with his hand to the next line and frames that and so on. The reading aid allows the person to focus only on the line that he is reading from. The colour of the reading aid may be red, yellow, green or blue as these are some of the colours that dyslexic people and others like them find relaxing. The reading aid may be plain on the side that they are reading from to prevent the child/adult being distracted. On the reverse side, the child/adult may use it as a normal ruler for class with inches and centimetres printed on it. The invention may give confidence to the child/adult. The invention may improve their reading within weeks. The reading aid may be used by all children/adults learning to read for the first time. When they are confident enough, and have practised using it for a time they may eventually be able to focus on the line of reading without it.

The reading aid is easy to use and simple. There may be a window in the centre of the reading aid and two grooves along the top of it for the person's two forefingers to sit in comfortably. The person may push the reading aid down gently along the page, using the inside edge of the book for balance and push downwards with their two fingers in place.

The reading aid may be of a hard plastic and of different dark colours such as red, yellow, blue, pink, green or black. These colours may draw the person's attention to the framed line and allow them to focus only on that line.

The invention is not only a reading aid. It may also be used as a child's class 7" small ruler that will fit into their pencil case. The measurements, inches and centimetres, may be printed on the reverse side of the reading aid.

The invention may have a window in the centre of it which may be the width/length of a line in a school book/novel. The window may vary in size due to the age of the person using the reading aid. For example a child of 4-6 years of age may have print on their school book which may be a font size 18. The window in the centre of the reading aid may then be measured to the size of the print on his/her reader. The next window size may be slightly smaller for an older child reading from their school book. For example at 6-8 years of age, the print may be smaller such as a font size 14. The next window size may be smaller for the age 9-10. This may be a font size 12. This font may be used in newspapers, magazines, novels etc.

The invention is not limited to the embodiments hereinbefore described, with reference to the accompanying drawings, which may be varied in construction and detail.

## Claims

1. A device to assist reading, the device defining a viewing part through which a first piece of text may be read and a non-viewing part to prevent a second piece of text from being seen, the size of the viewing part being selectively adjustable to enable text of different sizes to be read.

2. A device as claimed in claim 1 wherein the non-viewing part comprises a first element to prevent a piece of text above the first piece of text from being seen.

3. A device as claimed in claim 1 or 2 wherein the non-viewing part comprises a second element to prevent a piece of text below the first piece of text from being seen.

4. A device as claimed in claim 3 wherein the viewing part is defined between the first element and the second element.

5. A device as claimed in claim 3 or 4 wherein the first element is movable relative to the second element to adjust the size of the viewing part.

6. A device as claimed in claim 5 wherein the first element is movable relative to the second element in one or more discrete steps.

7. A device as claimed in any of claims 1 to 6 wherein the device comprises a holder element.

8. A device as claimed in claim 7 wherein the first element is mounted to the holder element.

9. A device as claimed in claim 8 wherein the first element is movably mounted to the holder element.

10. A device as claimed in any of claims 7 to 9 wherein the second element is mounted to the holder element.

11. A device as claimed in claim 10 wherein the second element is fixedly attached to the holder element.

12. A device as claimed in any of claims 7 to 11 wherein at least part of the holder element is transparent.

13. A device as claimed in claim 12 wherein the transparent part of the holder element comprises a coloured transparent portion.

14. A device as claimed in claim 13 wherein the holder element comprises a main body part and the coloured transparent portion is releasably mountable to the main body part.

15. A device as claimed in any of claims 12 to 14 wherein the viewing part is aligned with the transparent part of the holder element.
